# EUROPEAN PATENT SPECIFICATION

(11) **EP 4 048 079 B1**
(45) Date of publication and mention of the grant of the patent: **20.08.2025**
(21) Application number: 20804400.8
(22) Date of filing: 20.10.2020
(51) Int. Cl.: A23C 20/00, A23C 20/02, A23L 29/212

(54) **HIGH PROTEIN ANALOG CHEESE USING PEA STARCH AND METHODS FOR MAKING SUCH ANALOG CHEESE**
ANALOGKÄSE MIT HOHEM PROTEINGEHALT ENTHALTEND ERBSENSTÄRKE UND VERFAHREN ZUR HERSTELLUNG EINES SOLCHEN ANALOGKÄSES
PRODUITS ANALOGUES AU FROMAGE COMPRENANT DE L'AMIDON DE POIS ET A HAUTE TENEUR EN PROTEINES, ET METHODE DE PRODUCTION DE CET ANALOGUE DE FROMAGE

(30) Priority: 23.10.2019 US 201962924964 P
(43) Date of publication of application: 31.08.2022
(73) Proprietor: CORN Products Development Inc., Westchester, IL 60154 (US)
(72) Inventor: SANGHANI, Jay, Bridgewater, New Jersey 08807 (US); SPERANZA, Adrianne, Bridgewater, New Jersey 08807 (US); YURGEC, Matthew, Bridgewater, New Jersey 08807 (US)
(74) Representative: Novagraaf Group
(86) International application number: PCT/US2020/056461
(87) International publication number: WO 2021/080969

(56) References cited:
- WO-A1-2008/054232
- WO-A1-2013/165956
- WO-A1-2020/210195
- US-A1- 2019 037 872

## Description

The specification pertains to analog cheeses and more particularly to high protein analog cheeses.

Prior art disclosures of analog cheese products may be found in e.g., WO 2008/054232 A1.

Analog cheese, as used in this specification, is a non-dairy food composition intended to mimic a dairy cheese. The described analog cheeses include a plant protein source and other ingredients which combined are intended to provide the functionality of dairy cheese. While analog cheese is known, because plant proteins functions differently than milk protein, present analog cheese products do not provide equivalent protein content to dairy cheese. At least in part this is because at higher protein content it has proved difficult to avoid ingredient separation during analog cheese making, including for example oil separation.

The technology disclosed in this specification pertains to high protein analog cheese and method of making such products. In any embodiment, an analog cheese, as described in this specification has a protein content greater than about 10% by weight or greater than about 11% or greater than about 12% or from about 10% to about 15%, from about 10% to about 13% by weight. Such analog cheese has firmness that is like that of dairy cheese. In any embodiment, an analog cheese, as described in this specification has firmness of greater than about 5000 g, or greater than about 6000 g, from about 5000 g to about 7000 g.

The present invention is defined by the claims and relates to:
An analog cheese comprising:
- a protein content greater than about 10% by weight or greater than about 11% or greater than about 12% or from greater than about 10% to about 15%, or from greater than about 10% to about 13% by weight, and
- a native pea starch in an amount greater than about 4% by weight, or greater than about 6%, or greater than about 8%, or from about 4% to about 15% or from about 4% to about 12% or from about 6% to about 12% or from about 8% to about 12%
wherein, optionally, the protein content is from a pulse protein.

A method of making an analog cheese comprising:
(a) mixing a first mixture comprising water, a plant protein component, and a pea starch at a first mixing rate,
(b) mixing at second mixing rate, which is less than the first mixing rate, an oil and the first mixture and to form a second mixture,
(c) mixing at a third mixing rate, which is less than the second mixing rate, lactic acid with the second mixture to form a third mixture,
(d) heating the third mixture at a temperature of from about 80° to about 99° C, or from about 85° to about 95° C, or from about 90° C to about 95° C and
(e) allowing the third mixture to cool, wherein, optionally, the analog cheese has a protein content of greater than about 10% by weight or greater than about 11% or greater than about 12% or from about 10% to about 15%, or from about 10% to about 13% by weight.

In any embodiment, an analog cheese, as described in this specification includes a starch component. In any embodiment, a starch component of an analog cheese contains all starch within the analog cheese. In any embodiment starch component of an analog cheese consists of native starch. In any embodiment, an analog cheese as described in this specification does not comprise a modified starch. In any embodiment starch component of an analog cheese consists of native pea starch in an amount greater than about 4% by weight, or greater than about 6%, or greater than about 8%, or from about 4% to about 15% or from about 4% to about 12% or from about 6% to about 12% or from about 8% to about 12%. In any embodiment described in this specification an analog cheese comprises a pea starch having an apparent amylose content of from about 30% to about 40% or about 35%.

In any embodiment an analog cheese, as described in this specification, comprises pea starch as the sole native starch in a starch component for the purpose of increasing the firmness of an analog cheese compared to analog cheese using other native or modified starches. In any embodiment, a test analog cheese as described in this specification using a native pea starch has greater than 1.25 times the firmness of a comparative test analog cheese using a native starch other than pea starch, or greater than about 1.5 times, or greater than about 1.6 times, or greater than about 1.75 times, or greater than about 2 times, or greater than about 3 times. In any embodiment, a test analog cheese as described in this specification using a native pea starch has greater than 1.25 times the firmness of a comparative test analog cheese using an oxidized potato starch, or greater than about 1.5 times, or greater than about 1.6 times, or greater than about 1.75 times, or greater than about 2 times, or greater than about 2.25 times. In any embodiment, a test analog cheese as described in this specification using a native pea starch has greater than 1.25 times the firmness of a comparative test analog cheese using a native starch 50% amylose corn starch, or greater than about 1.5 times, or greater than about 1.6 times, or greater than about 1.75 times, or greater than about 2 times.

In any embodiment, a test analog cheese as described in this specification using a native pea starch has less oil separation during processing than a test analog cheese using a native starch other than a pea starch. In any embodiment a composition for making an analog cheese comprising native pea starch can be obtained using higher protein content without oil separation being evident than the same composition for making an analog cheese comprising a native starch that is not native pea starch.

In any embodiment of an analog cheese, as described in this specification the protein content of the analog cheese is supplied by a protein component. In any embodiment a protein component for use in an analog cheese, as described in this specification, consists of one or more pulse proteins. Pulse proteins useful for making an analog cheese include but are not limited pea protein, lentil protein, chickpea protein, and fava bean protein. In any embodiment of an analog cheese described in this specification the protein is provided as a pulse protein isolate. In any embodiment, an analog cheese, as described in this specification includes a pea protein in an amount of at least about 5% by weight or at least about 7.5% or at least about 10%, or of from about 5% to about 15% or from about 7.5% to about 12%. In any embodiment, an analog cheese includes a fava bean protein in an amount of at least about 5% by weight or at least about 7.5% or at least about 10%, or of from about 5% to about 15% or from about 7.5% to about 12%. In any embodiment, an analog cheese, as described in this specification includes a pulse protein isolate or a pulse protein concentrate, or a mixture of two pulse protein isolates, or a mixture of pulse protein concentrate and a pulse protein isolate, or a mixture of two pulse protein concentrates. In any embodiment, an analog cheese, as described in this specification includes a protein component having a fava bean protein isolate and a pea protein in a ratio of about 66:33, or about 60:40, or about 50:50, or about 33:66, or about 40:60, or about 25:75. In any embodiment, an analog cheese, as described in this specification includes a protein component, which contains all of the protein in the analog cheese, and which consists of a mixture of a fava bean protein isolate and a pea protein isolate.

In any embodiment, an analog cheese includes a pea starch, a protein component and a third ingredient. A third ingredient may be a liquid ingredient for example, an oil (including but not limited to coconut oil, or other vegetable oil), or water or salt, or an acidulent, for example including but not limited to lactic acid. In any embodiment, an analog cheese as described in this specification has a moisture content of from about 50% to about 60% or from about 50% to about 58% or from about 50% to about 54%. A third ingredient may be a hydrocolloid or a gum, or may be gum acacia, xanthan gum, locust bean gum, konjac gum, guar gum, and agar and mixtures thereof. A third ingredient may be salt or lactic acid, or another flavoring agent.

The technology disclosed in this specification pertains to methods of making an analog cheese. In any embodiment, a method of making an analog cheese, as described in this specification includes (a) mixing a first mixture comprising water, a plant protein component, and a pea starch at a first mixing rate, (b) mixing at second mixing rate, which is less than the first mixing rate, an oil and the first mixture to form a second mixture, (c) mixing at a third mixing rate, which is less than the second mixing rate, lactic acid with the second mixture to form a third mixture, (d) heating the third mixture and (e) allowing the third mixture to cool. In any embodiment, a method for making an analog cheese, as described in this specification includes hydrating a gum or mixture of gums in an aqueous solution at a first mixing rate.

In any embodiment, a method for making an analog cheese, as described in this specification includes mixing a mixture at a first mixing rate of from about 750 to about 4000 revolutions per minute ("RPM") RPM, or from about 1000 to about 3500 RPM, or from about 1500 to about 3000 RPM or from about 2000 to about 3000 RPM, or from about 2500 to about 3000 RPM. In any embodiment, a method for making an analog cheese, as described in this specification includes mixing a mixture at a second mixing rate of from about 750 RPM to about 3000 RPM, or from about 1000 RPM to about 2500 RPM, or from about 1000 RPM to about 2000 RPM or from about 1000 RPM to about 1500 RPM. In any embodiment, a method for making an analog cheese, as described in this specification includes mixing a mixture at a third mixing rate of from about 500 RPM to about 2000 RPM, or from about 500 RPM to about 1500 RPM, or from about 500 RPM to about 1000 RPM.

In any embodiment, a method for making an analog cheese, as described in this specification includes heating a mixture for from about 60 to about 300 seconds, or from about 60 to about 240 seconds, or from about 60 to about 180 seconds, or from about 60 to about 120 seconds, or from about 60 to about 90 seconds. In any embodiment, a method for making an analog cheese, as described in this specification includes mixing a mixture at from about 500 RPM to about 2000 RPM, or from about 500 RPM to about 1500 RPM, or from about 500 RPM to about 1000 RPM while heating the mixture. In an embodiment, a method of making an analog cheese, as described in this specification, heats a mixture at a temperature of from about 80° to about 99° C, or from about 85° to about 95° C, or from about 90° C to about 95°. In any embodiment, of the methods described in this specification a mixture is heated by applying direct or indirect heat, either using for example but not limited to electrical heating or steam heating or other method of heating the mixture within the mixer.

In any embodiment, a method of making an analog cheese as described in this specification is useful for making an analog cheese from any formulation described in this specification. In any embodiment, a method of making an analog cheese, as described in this specification substituting on a one for one basis a native pea starch for all native starch, such methods being useful for preventing separation of liquid and solid ingredients during making the analog cheeses, and being useful for increasing the firmness of an analog cheese.

Reference in this specification to "analog cheese" refers to a non-dairy food composition intended to mimic dairy cheese. The analog cheese described in this specification may mimic any target dairy cheese in texture and flavor, but in some embodiments analog cheese is intended to mimic semi-soft to hard cheese including for example commercially available Cheddar cheese sticks or cubes.

Reference in this specification to a "test analog cheese" means an analog cheese product, which is not according to the present invention, having the formula of Table 1.

**Table 1**

| Recipe of Test Analog Cheese | |
|---|---|
| Ingredients | % Usage |
| Water | 55.81 |
| Coconut Oil (refined) | 21.75 |
| Fava Bean Protein Concentrate | 4.17 |
| Pea Protein Isolate | 11.22 |
| TICALOID^{®} 620* | 0.75 |
| Starch | 4.00 |
| Lactic Acid | 1.30 |
| Salt | 1.00 |
| Total | 100.00 |

| | |
|---|---|
| *TICALOID^{®} 620 is a mixture of gums sold by Ingredion Incorporated. | |

Reference in this specification to "a test method of making an analog cheese" means use of the following method to make an analog cheese from the formula for making a test analog cheese. 1) Mix gum hydrated in water in a cooking mixer (e.g. from Stephan Machinery) for 2 minutes at 3000 RPM; 2) add remaining dry ingredients (protein, starch, and salt) and blend for 2 minutes at 3000 RPM; 3) add oil and mix for 2 minutes at 1500 RPM; 4) add lactic acid and blend for 45 seconds at 750 RPM; 5) heat mixture using direct steam to 201° F (about 94° C) and hold for 75 seconds at 750 RPM; and 6) collect product and cool.

Reference in this specification to a "pulse protein isolate" means a composition obtained from a milled pulse that is substantially plant protein. Pulses, which are the seeds of legumes, include peas, fava beans, chickpeas, and lentils, among other things. Pulses, as seeds, comprise starch, protein, and fiber, and frequently (but not necessarily) comprise greater than 50% starch and only around 30% protein. Once milled, the components of the pulse flour can be separated to be substantially pure. Within this specification, a pulse protein isolate comprises greater than about 75% protein by weight.

Reference in this specification to a "pulse protein concentrate" means a composition obtained from a milled pulse that is has increased plant protein content than would the unmilled pulse but less protein than a protein isolate. Within this specification, a pulse protein concentrate comprises from about 50% to less than about 75% protein by weight.

Reference in this specification to "native starch" means granular, unmodified starch. Starch being obtained by milling starch-containing plant parts may comprise trace amounts of other materials including but not limited to protein and fiber. Native starches for use in analog cheese are food grade starches and have starch content of at least about 98% starch by weight.

Within this specification, firmness is measured using a texture analyzer. In any embodiment, measurements can be made on refrigerated (about 4° C) blocks of analog cheese having height of about 17 to 18 millimeters or cores of analog cheese samples. In any embodiment a sample can be measured using the following procedure: measure sample using a TAXT II Plus Texture Analyzer and Exponent software equipped with a 30 kg load cell by a two-compression test with TA-25 25mm aluminum cylinder probe (8 mm/sec pre-test, test, and post-test speed, 10 mm compression distance, 2 second test rate, 10g trigger force).

The invention is defined by the claims. The technology is further described in the following aspects, which are intended to be illustrative, and are not intended to limit the full scope of the claims and their equivalents.

In a first aspect, the technology disclosed in this specification pertains to an analog cheese comprising protein content greater than about 10% by weight or greater than about 11% or greater than about 12% or from about 10% to about 15%, from about 10% to about 13% by weight, and a native pea starch in an amount greater than about 4% by weight, or greater than about 6%, or greater than about 8%, or from about 4% to about 15% or from about 4% to about 12% or from about 6% to about 12% or from about 8% to about 12%.

In a second aspect, the technology disclosed in this specification pertains to the analog cheese of the first aspect wherein the cheese has a firmness of greater than about 5000 g, or greater than about 6000 g, or from about 5000 g to about 7000 g.

In a third aspect, the technology disclosed in this specification pertains to the analog cheese of the first or second aspect wherein the protein content is from a pulse protein.

In a fourth aspect, the technology disclose in this specification pertains to the analog cheese of any one of the first to third aspect wherein the protein is provided as a protein component comprising a pea protein (as a first pulse protein) and protein in an amount of at least about 5% by weight or at least about 7.5% or at least about 10%, of from about 5% to about 15% or from about 7.5% to about 12% and a second pulse protein.

In a fifth aspect, the technology disclosed in this specification pertains to the analog cheese of any one of the first to fourth aspects wherein the protein is provided as a protein component comprising a fava bean protein in an amount of at least about 5% by weight or at least about 7.5% or at least about 10%, of from about 5% to about 15% or from about 7.5% to about 12% and a second pulse protein.

In a sixth aspect, the technology disclosed in this specification pertains to the analog cheese of any one of the first to fifth aspects wherein the protein is provided as a protein component consisting of one of a pea protein and a mixture of a fava bean protein and a pea protein, and optionally wherein the fava bean protein and pea protein are used in a ratio of from 66:33 (fava bean to pea), or about 60:40, or about 50:50, or about 33:66, or 40:60, or about 25:75.

In a seventh aspect, the technology disclosed in this specification pertains to the analog cheese of any one of the first to sixth aspects further having a moisture content of from about 50% to about 60% or from about 50% to about 58% or from about 50% to about 54%.

In an eighth aspect, the technology disclosed in this specification pertains to the analog cheese of any one of the first to seventh aspects further comprising a gum selected from the group consisting of acacia, xanthan, locust bean and mixtures thereof.

In a ninth aspect, the technology disclosed in this specification pertains to the analog cheese of any one of the first to eighth aspects, which does not comprise a modified starch.

In a tenth aspect, the technology disclosed in this specification pertains to a method of making an analog cheese comprising (a) mixing a first mixture comprising water, a plant protein component, and a pea starch at a first mixing rate, (b) mixing at second mixing rate, which is less than the first mixing rate, an oil and the first mixture and to form a second mixture, (c) mixing at a third mixing rate, which is less than the second mixing rate, lactic acid with the second mixture to form a third mixture, (d) heating the third mixture at a temperature of from about 80° to about 99° C, or from about 85° to about 95° C, or from about 90° C to about 95° C and (e) allowing the third mixture to cool, optionally wherein the analog cheese has a protein content of greater than about 10% by weight or greater than about 11% or greater than about 12% or from about 10% to about 15%, from about 10% to about 13% by weight.

In an eleventh aspect, the technology disclosed in this specification pertains to the method of the tenth aspect wherein the pea starch is used in an amount greater than about 4% by weight, or greater than about 6%, or greater than about 8%, or from about 4% and about 15% or from about 4% to about 12% or from about 6% to about 12% or from about 8% to about 12%.

In a twelfth aspect, the technology disclosed in this specification pertains to the method of the tenth or eleventh aspects wherein protein component consists of a fava bean protein and a pea protein, and optionally wherein the fava bean protein and pea protein are used in a ratio of from 66:33, or about 60:40, or about 50:50, or about 33:66, or 40:60, or about 25:75.

In a thirteenth aspect, the technology disclosed in this specification pertains to the method of any one of the tenth to twelfth aspects further comprises, prior to mixing the first mixture, hydrating a gum in an aqueous solution at the first mixing rate.

In a fourteenth aspect, the technology disclosed in this specification pertains to the method of any one of the tenth to thirteenth wherein the gum selected from the group consisting of acacia, xanthan, locust bean and mixtures thereof.

In a fifteenth aspect, the technology disclosed in this specification pertains to the method of any one of the tenth to fourteenth aspects wherein the first mixing rate is from about 750 to about 4000 RPM, or from ab out 1000 to about 3500 RPM, or from about 1500 to about 3000 RPM or from about 2000 to about 3000 RPM, or from about 2500 to about 3000 RPM.

In a sixteenth aspect, the technology disclosed in this specification pertains to the method of any one of the tenth to fifteenth aspects wherein the second mixing rate is from about 750 RPM to about 3000 RPM, or from about 1000 RPM to about 2500 RPM, or from about 1000 RPM to about 2000 RPM or from about 1000 RPM to about 1500 RPM .

In a seventeenth aspect, the technology disclosed in this specification pertains to the method of any one of the tenth to sixteenth aspects wherein the third mixing rate is from about 500 RPM to about 2000 RPM, or from about 500 RPM to about 1500 RPM, or from about 500 RPM to about 1000 RPM.

In an eighteenth aspect, the technology disclosed in this specification pertains to the method of any one of the tenth to seventeenth aspects wherein the mixture is heated for from about 60 to about 300, or from about 60 to about 240 seconds, or from about 60 to about 180 seconds, or from about 60 to about 120 seconds, or from about 60 to about 90 seconds.

In a nineteenth aspect, the technology disclosed in this specification pertains to the use of a native pea starch as described in any foregoing claims to increase the firmness of a high protein analog cheese.

In a twentieth aspect, the technology disclosed in this specification pertains a method for increasing the firmness of an analog cheese comprising: (a) a starch component of native starches, the method comprising substituting on a one for one basis a native pea starch for all native starch, and (b) making an analog cheese using a method comprising (i) mixing a first mixture comprising water, a plant protein component, and a pea starch at a first mixing rate, (ii) mixing at second mixing rate, which is less than the first mixing rate, an oil and the first mixture and to form a second mixture, (iii) mixing at a third mixing rate, which is less than the second mixing rate, lactic acid with the second mixture to form a third mixture, (iv) heating the third mixture at a temperature of from about 80° to about 99° C, or from about 85° to about 95° C, or from about 90° C to about 95° C and (v) allowing the third mixture to cool, optionally wherein the analog cheese has a protein content of greater than about 10% by weight or greater than about 11% or greater than about 12% or from about 10% to about 15%, from about 10% to about 13% by weight.

In a twenty-first aspect, the technology disclosed in this specification pertains to the twentieth aspect wherein the analog cheese is a test analog cheese that was made by a test method of making an analog cheese, and wherein the test analog cheese comprising pea starch has greater than 1.25 times the firmness of a comparative test analog cheese using a native starch other than pea starch, or greater than about 1.5 times, or greater than about 1.6 times, or greater than about 1.75 times, or greater than about 2 times, or greater than about 3 times.

In a twenty-second aspect, the technology disclosed in this specification pertains to the method of claims twenty or twenty-first aspects wherein the analog cheese is a test analog cheese that was made by a test method of making an analog cheese, and wherein the test analog cheese comprising pea starch has greater than 1.25 times the firmness of a comparative test analog cheese using a native starch 50% amylose corn starch, or greater than about 1.5 times, or greater than about 1.6 times, or greater than about 1.75 times, or greater than about 2 times. The technology is further described by the following examples, which are intended to be illustrative and are not intended to limit the full scope of the claims or their equivalents.

### EXAMPLE 1 - METHOD OF MAKING ANALOG CHEESE

Analog cheeses were made using various starches and various amount of starch and were evaluated for firmness using refrigerated (about 4° C) blocks of analog cheese having heights of about 17 to 18 millimeters. Samples were measured using a TAXTII Plus Texture Analyzer and Exponent software equipped with a 30 kg load cell by a two-compression test with TA-25 25mm aluminum cylinder probe (8 mm/sec pre-test, test, and post-test speed, 10 mm compression distance, 2 second test rate, 10g trigger force).

An analog cheese was made as follows . Gum mix was hydrated in water in a cooking mixer available from Stephan Machinery for 2 minutes at 3000 RPM. Remaining dry ingredients (protein, starch, and salt) were added and the mixture was blended for 2 minutes at 3000 RPM. Oil was added and mixed for 2 minutes at 1500 RPM. Lactic acid was added and blended for 45 seconds at 750 RPM. The mixture was heated using direct steam to 201° F (about 94° C) and held for 75 seconds at 750 RPM. The product was collected and cooled.

### EXAMPLE 2 - EFFECT OF STARCH TYPE ON ANALOG CHEESE FIRMNESS

The formula reported in Table 2 was used to make 11.5% protein analog cheeses.

**Table 2**

| Formula for High Protein Analog Cheese | | | | | |
|---|---|---|---|---|---|
| Ingredients | % Usage | %Protein | % Fat | % Solids | Wt. (g) |
| Water | 55.81 | 0.00 | 0.00 | 0.00 | 5581.00 |
| Coconut Oil (refined) | 21.75 | 0.00 | 21.53 | 21.75 | 2175.00 |
| Fava Bean Protein Concentrate | 4.17 | 2.50 | 0.15 | 4.04 | 417.00 |
| Pea Protein Isolate | 11.22 | 8.98 | 0.02 | 10.88 | 1122.00 |
| TICALOID^{®} 620 (gum mix) | 0.75 | 0.00 | 0.00 | 0.66 | 75.00 |
| Starch | 4.00 | 0.00 | 0.00 | 3.52 | 400.00 |
| Lactic Acid | 1.30 | 0.00 | 0.00 | 0.00 | 130.00 |
| Salt | 1.00 | 0.00 | 0.00 | 1.00 | 100.00 |
| Total | 100.00 | 11.48 | 21.70 | 41.86 | 10000.00 |

Using the formula of Table 2 and foregoing method, analog cheeses were made using various starches. The analog cheeses were measured for firmness. The results are reported in Table 3.

**Table 3**

| Firmness of Analog Cheese Made from Various Starch | | |
|---|---|---|
| Sample No. | Starch | Firmness (g) |
| 1 | Native Pea Starch | 5454 |
| 2 | Native Tapioca Starch | 2660 |
| 3 | Thermally Inhibited Potato Starch | 3362 |
| 4 | Native Rice Starch | 1677 |
| 5 | Native Corn Starch | 2348 |
| 6 | Native Potato Starch | 3552 |
| 7 | Native 50% Amylose Corn Starch | 2777 |
| 8 | Oxidized Potato Starch (Control) | 2285 |
| 9 | Crosslinked Potato Starch (Control) | 5496 |

As shown in Table 3 analog cheeses made from native pea starch (Sample 1) were firmer from analog cheeses made using other native starches (2, 4-7). Also as shown, the analog cheeses made from native pea starch had similar firmness to starches made from crosslinked potato starch, but were firmer than analog cheeses made using oxidized potato starch.

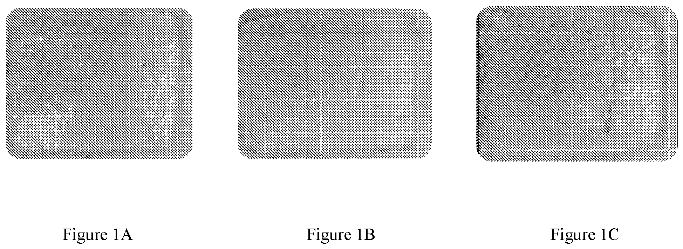

Also, it was observed that during processes analog cheese batters made using pea starch suffered from less oil separation than was observed for analog cheese using native potato starch or native tapioca starch. With reference to Figures 1A, 1B, and 1C this can be seen in the oil sheen on the Figure 1A (potato starch) and Figure 1C (tapioca starch) samples, which is not seen on the pea starch sample, Figure 1B.

### EXAMPLE 2 - EFFECT OF INCREASING PEA STARCH ON HARDNESS

Analog cheeses using various amounts of pea starch were made using the formula of Table 1 except water content was reduced to account for increased pea starch. For example a 6% pea starch analog cheese used 53.8% water, and an analog cheese made using 8% pea starch had 51.8% water. The firmness of analog cheese using 4%, 6%, and 8% pea protein is reported in Table 4.

**Table 4**

| Analog Cheese Using Various Amounts of Pea Starch | | |
|---|---|---|
| Sample No. | % Pea starch | Firmness (g) |
| 10 | 4% Pea Starch | 5311 |
| 11 | 6% Pea Starch | 5821 |
| 12 | 8% Pea Starch | 6011 |

### EXAMPLE 3 - EFFECT OF PROTEIN CONTENT ON HARDNESS

Analog cheeses using various proteins and protein amounts were analyzed for firmness. All samples were made from formulations based on that of Table 2 but with reduced amounts of water as protein content increased. Table 5 shows the effect of increasing protein content while maintaining the ratio of pea protein to fava bean protein.

**Table 5**

| Pea Protein Analog Cheeses - Varying Protein Amounts | | |
|---|---|---|
| Sample No. | % Pea starch | Firmness (g) |
| 13 | 11.5% Protein | 5311 |
| 14 | 12.8% Protein | 5002 |

Notable as protein content increases, and so solids content increase, analog cheese firmness does not necessarily increase.

## Claims

1. An analog cheese comprising:
a protein content greater than about 10% by weight or greater than about 11% or greater than about 12% or from greater than about 10% to about 15%, or from greater than about 10% to about 13% by weight, and
a native pea starch in an amount greater than about 4% by weight, or greater than about 6%, or greater than about 8%, or from about 4% to about 15% or from about 4% to about 12% or from about 6% to about 12% or from about 8% to about 12%
wherein, optionally, the protein content is from a pulse protein.

2. The analog cheese of claim 1 wherein the cheese has a firmness of greater than about 5000 g, or greater than about 6000 g, or from about 5000 g to about 7000 g.

3. The analog cheese of any one of claims 1 to 2 wherein the protein is provided as a protein component comprising a first protein being a pea protein and a second protein being a second pulse protein wherein the second protein is in an amount of at least about 5% by weight or at least about 7.5% or at least about 10%, of from about 5% to about 15% or from about 7.5% to about 12%.

4. The analog cheese of any one of claims 1 to 3 wherein the protein is provided as a protein component comprising a fava bean protein in an amount of at least about 5% by weight or at least about 7.5% or at least about 10%, of from about 5% to about 15% or from about 7.5% to about 12%.

5. The analog cheese of any one of claims 1 to 4 wherein the protein is provided as a protein component consisting of one of a pea protein or a mixture of a fava bean protein and a pea protein,
wherein, optionally, the fava bean protein and pea protein are used in a ratio of from 66:33 (fava bean to pea), or about 60:40, or about 50:50, or about 33:66, or 40:60, or about 25:75.

6. The analog cheese of any one of claims 1 to 5 further having a moisture content of from about 50% to about 60% or from about 50% to about 58% or from about 50% to about 54%.

7. The analog cheese of any one of claims 1 to 6 which does not comprise a modified starch.

8. A method of making an analog cheese comprising:
(a) mixing a first mixture comprising water, a plant protein component, and a pea starch at a first mixing rate,
(b) mixing at second mixing rate, which is less than the first mixing rate, an oil and the first mixture and to form a second mixture,
(c) mixing at a third mixing rate, which is less than the second mixing rate, lactic acid with the second mixture to form a third mixture,
(d) heating the third mixture at a temperature of from about 80° to about 99° C, or from about 85° to about 95° C, or from about 90° C to about 95° C and
(e) allowing the third mixture to cool,
wherein, optionally, the analog cheese has a protein content of greater than about 10% by weight or greater than about 11% or greater than about 12% or from about 10% to about 15%, or from about 10% to about 13% by weight.

9. The method of claim 8 wherein the pea starch is used in an amount greater than about 4% by weight, or greater than about 6%, or greater than about 8%, or from about 4% to about 15% or from about 4% to about 12% or from about 6% to about 12% or from about 8% to about 12%.

10. The method of claim 8 or 9 wherein protein component consists of a fava bean protein and a pea protein, and optionally wherein the fava bean protein and pea protein are used in a ratio of about 66:33, or about 60:40, or about 50:50, or about 33:66, or 40:60, or about 25:75.

11. The method of any one of claims 8 to 10 further comprises, prior to mixing the first mixture, hydrating a gum in an aqueous solution at the first mixing rate;
wherein, optionally, the gum is selected from the group consisting of acacia, xanthan, locust bean and mixtures thereof.

12. The method of any one of claims 8 to 11 wherein the first mixing rate is from about 750 to about 4000 RPM, or from about 1000 to about 3500 RPM, or from about 1500 to about 3000 RPM or from about 2000 to about 3000 RPM, or from about 2500 to about 3000 RPM.

13. The method of any one of claims 8 to 12 wherein the second mixing rate is from about 750 RPM to about 3000 RPM, or from about 1000 RPM to about 2500 RPM, or from about 1000 RPM to about 2000 RPM or from about 1000 RPM to about 1500 RPM.

14. The method of any one of claims 8 to 13 wherein the third mixing rate is from about 500 RPM to about 2000 RPM, or from about 500 RPM to about 1500 RPM, or from about 500 RPM to about 1000 RPM.

15. The method of any one of claims 8 to 15 wherein the mixture is heated for from about 60 to about 300, or from about 60 to about 240 seconds, or from about 60 to about 180 seconds, or from about 60 to about 120 seconds, or from about 60 to about 90 seconds.

## Patentansprüche

1. Analogkäse, umfassend:
einen Proteingehalt von mehr als etwa 10 Gew.-% oder mehr als etwa 11 % oder mehr als etwa 12 % oder von mehr als etwa 10 % bis etwa 15 % oder von mehr als etwa 10 % bis etwa 13 Gew.-% und
eine native Erbsenstärke in einer Menge von mehr als etwa 4 Gew.-% oder mehr als etwa 6 %, oder mehr als etwa 8 %, oder von etwa 4 % bis etwa 15 %, oder von etwa 4 % bis etwa 12 %, oder von etwa 6 % bis etwa 12 %, oder von etwa 8 % bis etwa 12 %
wobei optional der Proteingehalt aus einem Hülsenfruchtprotein stammt.

2. Analogkäse nach Anspruch 1, wobei der Käse eine Festigkeit von mehr als etwa 5000 g oder mehr als etwa 6000 g oder von etwa 5000 g bis etwa 7000 g aufweist.

3. Analogkäse nach einem der Ansprüche 1 bis 2, wobei das Protein als eine Proteinkomponente bereitgestellt wird, umfassend ein erstes Protein, das ein Erbsenprotein ist, und ein zweites Protein, das ein zweites Hülsenfruchtprotein ist, wobei das zweite Protein in einer Menge von mindestens etwa 5 Gew.-% oder mindestens etwa 7,5 % oder mindestens etwa 10 %, von etwa 5 % bis etwa 15 % oder von etwa 7,5 % bis etwa 12 % vorliegt.

4. Analogkäse nach einem der Ansprüche 1 bis 3, wobei das Protein als eine Proteinkomponente bereitgestellt wird, umfassend ein Favabohnenprotein in einer Menge von mindestens etwa 5 Gew.-% oder mindestens etwa 7,5 % oder mindestens etwa 10 %, von etwa 5 % bis etwa 15 % oder von etwa 7,5 % bis etwa 12 %.

5. Analogkäse nach einem der Ansprüche 1 bis 4, wobei das Protein als eine Proteinkomponente bereitgestellt wird, die aus einem von einem Erbsenprotein oder einer Mischung aus einem Favabohnenprotein und einem Erbsenprotein besteht,
wobei optional das Favabohnenprotein und das Erbsenprotein in einem Verhältnis von 66 : 33 (Favabohne zu Erbse) oder etwa 60 : 40 oder etwa 50 : 50 oder etwa 33 : 66 oder 40 : 60 oder etwa 25 : 75 verwendet werden.

6. Analogkäse nach einem der Ansprüche 1 bis 5, der ferner einen Feuchtigkeitsgehalt von etwa 50 % bis etwa 60 % oder von etwa 50 % bis etwa 58 % oder von etwa 50 % bis etwa 54 % aufweist.

7. Analogkäse nach einem der Ansprüche 1 bis 6, der keine modifizierte Stärke umfasst.

8. Verfahren zum Herstellen eines Analogkäses, umfassend:
(a) Mischen einer ersten Mischung, umfassend Wasser, eine Pflanzenproteinkomponente und eine Erbsenstärke, bei einer ersten Mischrate,
(b) Mischen, bei einer zweiten Mischrate, die geringer als die erste Mischrate ist, eines Öls und der ersten Mischung, und um eine zweite Mischung auszubilden,
(c) Mischen, bei einer dritten Mischrate, die geringer als die zweite Mischrate ist, von Milchsäure mit der zweiten Mischung, um eine dritte Mischung auszubilden,
(d) Erhitzen der dritten Mischung bei einer Temperatur von etwa 80° bis etwa 99 °C oder von etwa 85° bis etwa 95 °C oder von etwa 90 °C bis etwa 95 °C und
(e) Abkühlenlassen der dritten Mischung,
wobei optional der Analogkäse einen Proteingehalt von mehr als etwa 10 Gew.-% oder mehr als etwa 11 % oder mehr als etwa 12 % oder von etwa 10 % bis etwa 15 % oder von etwa 10 % bis etwa 13 Gew.-% aufweist.

9. Verfahren nach Anspruch 8, wobei die Erbsenstärke in einer Menge von mehr als etwa 4 Gew.-% oder mehr als etwa 6 %, oder mehr als etwa 8 %, oder von etwa 4 % bis etwa 15 %, oder von etwa 4 % bis etwa 12 %, oder von etwa 6 % bis etwa 12 % oder von etwa 8 % bis etwa 12 % verwendet wird.

10. Verfahren nach Anspruch 8 oder 9, wobei die Proteinkomponente aus einem Favabohnenprotein und einem Erbsenprotein besteht und optional wobei das Favabohnenprotein und das Erbsenprotein in einem Verhältnis von etwa 66 : 33 oder etwa 60 : 40 oder etwa 50 : 50 oder etwa 33 : 66 oder 40 : 60 oder etwa 25 : 75 verwendet werden.

11. Verfahren nach einem der Ansprüche 8 bis 10, das ferner, vor dem Mischen der ersten Mischung, ein Hydratisieren eines Gummis in einer wässrigen Lösung bei der ersten Mischrate umfasst;
wobei optional das Gummi aus der Gruppe ausgewählt ist, bestehend aus Akazie, Xanthan, Johannisbrot und Mischungen davon.

12. Verfahren nach einem der Ansprüche 8 bis 11, wobei die erste Mischrate von etwa 750 bis etwa 4000 U/min oder von etwa 1000 bis etwa 3500 U/min oder von etwa 1500 bis etwa 3000 U/min oder von etwa 2000 bis etwa 3000 U/min oder von etwa 2500 bis etwa 3000 U/min beträgt.

13. Verfahren nach einem der Ansprüche 8 bis 12, wobei die zweite Mischrate von etwa 750 U/min bis etwa 3000 U/min oder von etwa 1000 U/min bis etwa 2500 U/min oder von etwa 1000 U/min bis etwa 2000 U/min oder von etwa 1000 U/min bis etwa 1500 U/min beträgt.

14. Verfahren nach einem der Ansprüche 8 bis 13, wobei die dritte Mischrate von etwa 500 U/min bis etwa 2000 U/min oder von etwa 500 U/min bis etwa 1500 U/min oder von etwa 500 U/min bis etwa 1000 U/min beträgt.

15. Verfahren nach einem der Ansprüche 8 bis 15, wobei die Mischung von etwa 60 bis etwa 300 oder von etwa 60 bis etwa 240 Sekunden oder von etwa 60 bis etwa 180 Sekunden oder von etwa 60 bis etwa 120 Sekunden oder von etwa 60 bis etwa 90 Sekunden lang erhitzt wird.

## Revendications

1. Succédané de fromage comprenant :
une teneur en protéines supérieure à environ 10 % en poids ou supérieure à environ 11 % ou supérieure à environ 12 % ou de plus d'environ 10 % à environ 15 %, ou de plus d'environ 10 % à environ 13 % en poids, et
un amidon de pois natif en une quantité supérieure à environ 4 % en poids, ou supérieure à environ 6 %, ou supérieure à environ 8 %, ou d'environ 4 % à environ 15 % ou d'environ 4 % à environ 12 % ou d'environ 6 % à environ 12 % ou d'environ 8 % à environ 12 %
dans lequel, facultativement, la teneur en protéines provient d'une protéine de légumineuse.

2. Succédané de fromage selon la revendication 1 dans lequel le fromage a une fermeté supérieure à environ 5000 g, ou supérieure à environ 6000 g, ou d'environ 5000 g à environ 7000 g.

3. Succédané de fromage selon l'une quelconque des revendications 1 à 2 dans lequel la protéine est fournie en tant que composant protéiné comprenant une première protéine étant une protéine de pois et une seconde protéine étant une seconde protéine de légumineuse dans lequel la seconde protéine est en une quantité d'au moins environ 5 % en poids ou d'au moins environ 7,5 % ou d'au moins environ 10 %, ou d'environ 5 % à environ 15 % ou d'environ 7,5 % à environ 12 %.

4. Succédané de fromage selon l'une quelconque des revendications 1 à 3 dans lequel la protéine est fournie en tant que composant protéiné comprenant une protéine de féverole en une quantité d'au moins environ 5 % en poids ou d'au moins environ 7,5 % ou d'au moins environ 10 %, allant d'environ 5 % à environ 15 % ou d'environ 7,5 % à environ 12 %.

5. Succédané de fromage selon l'une quelconque des revendications 1 à 4 dans lequel la protéine est fournie en tant que composant protéiné constitué par l'une parmi une protéine de pois ou un mélange d'une protéine de féverole et d'une protéine de pois,
dans lequel, facultativement, la protéine de féverole et la protéine de pois sont utilisées dans un rapport de 66:33 (féverole à pois), ou d'environ 60:40, ou d'environ 50:50, ou d'environ 33:66, ou de 40:60, ou d'environ 25:75.

6. Succédané de fromage selon l'une quelconque des revendications 1 à 5 ayant en outre une teneur en humidité allant d'environ 50 % à environ 60 % ou d'environ 50 % à environ 58 % ou d'environ 50 % à environ 54 %.

7. Succédané de fromage selon l'une quelconque des revendications 1 à 6 qui ne comprend pas d'amidon modifié.

8. Procédé de fabrication d'un succédané de fromage comprenant :
(a) le fait de mélanger un premier mélange comprenant de l'eau, un composant protéiné végétal et un amidon de pois à une première vitesse de mélange,
(b) le fait de mélanger à une deuxième vitesse de mélange, qui est inférieure à la première vitesse de mélange, une huile et le premier mélange et pour former un deuxième mélange,
(c) le fait de mélanger à une troisième vitesse de mélange, qui est inférieure à la deuxième vitesse de mélange, de l'acide lactique avec le deuxième mélange pour former un troisième mélange,
(d) le fait de chauffer le troisième mélange à une température allant d'environ 80 ° à environ 99 °C, ou d'environ 85 ° à environ 95 °C, ou d'environ 90 °C à environ 95 °C et
(e) le fait de laisser le troisième mélange refroidir,
dans lequel, facultativement, le succédané de fromage a une teneur en protéines supérieure à environ 10 % en poids ou supérieure à environ 11 % ou supérieure à environ 12 % ou d'environ 10 % à environ 15 %, ou d'environ 10 % à environ 13 % en poids.

9. Procédé selon la revendication 8 dans lequel l'amidon de pois est utilisé en une quantité supérieure à environ 4 % en poids, ou supérieure à environ 6 %, ou supérieure à environ 8 %, ou d'environ 4 % à environ 15 % ou d'environ 4 % à environ 12 % ou d'environ 6 % à environ 12 % ou d'environ 8 % à environ 12 %.

10. Procédé selon la revendication 8 ou 9 dans lequel le composant protéiné est constitué d'une protéine de féverole et d'une protéine de pois, et facultativement dans lequel la protéine de féverole et la protéine de pois sont utilisées dans un rapport d'environ 66:33, ou d'environ 60:40, ou d'environ 50:50, ou d'environ 33:66, ou de 40:60, ou d'environ 25:75.

11. Procédé selon l'une quelconque des revendications 8 à 10 comprenant en outre, avant de mélanger le premier mélange, l'hydratation d'une gomme dans une solution aqueuse à la première vitesse de mélange ;
dans lequel, facultativement, la gomme est choisie dans le groupe constitué par acacia, xanthane, caroube et mélanges de celles-ci.

12. Procédé selon l'une quelconque des revendications 8 à 11 dans lequel la première vitesse de mélange va d'environ 750 à environ 4000 tr/min, ou d'environ 1000 à environ 3500 tr/min, ou d'environ 1500 à environ 3000 tr/min ou d'environ 2000 à environ 3000 tr/min, ou d'environ 2500 à environ 3000 tr/min.

13. Procédé selon l'une quelconque des revendications 8 à 12 dans lequel la deuxième vitesse de mélange va d'environ 750 tr/min à environ 3000 tr/min, ou d'environ 1000 tr/min à environ 2500 tr/min, ou d'environ 1000 tr/min à environ 2000 tr/min ou d'environ 1000 tr/min à environ 1500 tr/min.

14. Procédé selon l'une quelconque des revendications 8 à 13 dans lequel la troisième vitesse de mélange va d'environ 500 tr/min à environ 2000 tr/min, ou d'environ 500 tr/min à environ 1500 tr/min, ou d'environ 500 tr/min à environ 1000 tr/min.

15. Procédé selon l'une quelconque des revendications 8 à 15 dans lequel le mélange est chauffé pendant une durée allant d'environ 60 à environ 300, ou d'environ 60 à environ 240 secondes, ou d'environ 60 à environ 180 secondes, ou d'environ 60 à environ 120 secondes, ou d'environ 60 à environ 90 secondes.
